Europäisches Patentamt

European Patent Office

Office européen des brevets

(11) Publication number: **0 405 837 A2**

# EUROPEAN PATENT APPLICATION

(21) Application number: 90306779.1

(51) Int. Cl.⁵: **B60S 1/38**

(22) Date of filing: 21.06.90

(30) Priority: 27.06.89 GB 8914712

(43) Date of publication of application:
02.01.91 Bulletin 91/01

(84) Designated Contracting States:
DE ES FR GB IT SE

(71) Applicant: CHINA WIPER SPECIAL RUBBER
CO. LTD.
180, Hsin Min Street

Tamsui, Taipei(TW)

(72) Inventor: **Charng, Cedric Sheng Kao**
**3F-1 No.5 Lane 56, Wan An Street**
**Moojar, Taipei City(TW)**

(74) Representative: **Newby, Martin John et al**
**J.Y. & G.W. Johnson Furnival House 14-18**
**High Holbornorn**
**London WC1V 6DE(GB)**

(54) A windscreen wiper blade assembly.

(57) A windscreen wiper blade assembly comprises a metallic first yoke (1) having joined thereto, at one or both of its ends, a preferably metallic second yoke (5). The or each joint between the first and second yokes (1 and 5) is provided by a non-metallic channel shaped joint member (6) having first interengaging means (20, 21) interengaging with second interengaging means (22, 23) on the first yoke (1) for securing the joint member to the first yoke and retaining means (13, 14) for retaining the second yoke between the spaced apart side walls (10,11) of the joint member (6). The first interengaging means (20, 21) are formed on distal portions of the side walls (10, 11) which can be resiliently deflected inwards even when the second yoke (5) is retained between the side walls (10, 11).

FIG. 5

# A WINDSCREEN WIPER BLADE ASSEMBLY

This invention relates to a windscreen wiper blade assembly of the kind comprising a metallic channel shaped first yoke having spaced apart first side walls, at least one second yoke having spaced apart second side walls, and at least one non-metallic, generally channel shaped joint member for respectively joining said at least one second yoke to said first yoke, the or each joint member having resiliently deflectable, spaced apart third side walls which are connected by web means and which each comprise a proximal portion adjacent said web and a distal portion remote from said web, the or each joint member having first interengaging means for interengaging with second interengaging means on said first yoke to secure the joint member to the first yoke between the spaced apart first side walls thereof and retaining means for retaining the, or the associated, second yoke between said spaced apart third side walls. The invention also relates to a method of assembling a windscreen wiper assembly of the kind referred to.

A known windscreen wiper blade assembly of the kind referred to is described in GB-B-2011250. In this known wiper blade assembly, the second interengaging means comprise inwardly turned tongues formed at the free ends of the spaced apart first side walls and the first interengaging means comprise corresponding tongue-receiving pockets formed in the spaced apart third side walls. However one disadvantage of this known windscreen wiper assembly is that in order to assemble the latter it is necessary initially for the first side walls to diverge to leave sufficient room for the joint member to be received between the spaced apart first side walls. It is then necessary, as a subsequent assembly step, to move the first side walls from their diverging disposition into a substantially parallel disposition so that the tongues are caused to interengage in the tongue-receiving pockets. Thus the assembly procedure involves the step of using a special bending tool or machine to bend the metallic first side walls of the first yoke from a diverging disposition to a substantially parallel disposition.

Another known windscreen wiper blade assembly of the kind referred to is described in GB-A-2159697. As with the wiper blade assembly described in GB-B-2011250, the channel shaped joint member rests within, being oriented in the same direction as, the channel shaped first yoke.

The present invention seeks to provide a windscreen wiper blade assembly of the kind referred to which can be assembled relatively easily in a novel manner and without the need to bend metallic components during the assembly process.

According to one aspect of the present invention a windscreen wiper blade assembly of the kind referred to is characterised in that the or each channel shaped joint member is oriented in an opposite direction to the channel shaped first yoke, the said first interengaging means are formed on the said distal portions of said third side walls of the or each joint member and in that said retaining means retain the second side walls of the or each second yoke between the said proximal portions of said third side walls of the, or the associated, joint member so as not to obstruct the space between the said distal portions thereby enabling the latter to be resiliently deflected towards each other.

In order to assemble the or each second yoke to the first yoke in a windscreen wiper blade assembly according to the invention, the second-yoke is initially located in its retained position between the spaced apart third side walls of the, or the associated, joint member. The distal portions of the spaced apart third side walls are then resiliently deflected towards each other to enable the third side walls to be inserted between the spaced apart first side walls and to enable interengagement of the first and second interengaging means.

Preferably the or each second yoke is metallic.

Suitably the first and third side walls are substantially parallel to each other.

Conveniently the first yoke has an apertured web connecting said spaced apart first walls.

Suitably the first interengaging means of the or each joint member comprise a separate projection extending outwardly from each third side wall and the second interengaging means comprise projection-receiving recesses in the first side walls. Alternatively, but less preferably, the first interengaging means may comprise recesses and the second interengaging means may comprise inwardly extending projections. In either case, the free end surface of each projection may be angled to assist inward deflection of the said distal portions of the third side walls as the joint member is inserted between the spaced apart first side walls during assemblage of a windscreen wiper blade assembly.

Preferably the or each second yoke is channel shaped and has a web connecting its spaced apart second side walls. Preferably the second yoke web and adjacent parts of the second side walls are cut away in a region of the second yoke which is retained between the spaced apart third side walls of the joint member. This cut away region enables the said distal portions of the spaced apart third side walls to be resiliently deflected towards each other without being obstructed by parts of the second yoke.

The second side walls may be extended in the region where they are retained between the spaced apart third side walls. For instance when the or each second yoke is channel shaped and is provided with said cut away region, the extensions extend away from the web opposite said cut away region and serve to strengthen the second side walls. The web means of the or each joint means may be apertured to receive the extended portions of the second side walls.

Conveniently the or each joint member has inwardly extending projection means on its spaced apart third side walls for cooperation with the, or the associated, second yoke to retain the latter between the spaced apart third side walls. Typically each projection means comprises a rib for retaining the second side walls between the ribs and the web means of the joint member. Conveniently each projection means has an inclined surface facing away from the web means of the joint member to encourage the outward resilient deflection of the spaced apart third side walls as the second yoke is moved between the third walls prior to becoming retained therebetween during assemblage of the wiper blade assembly. Suitably the second yoke is fairly tightly retained by these ribs in its position between the spaced apart third side walls, the resilience of the non-metallic, e.g. plastics material, joint member enabling slight rocking or pivoting movement of the second yoke relative to the first yoke. Alternatively, however, the wiper blade assembly may be positively designed to encourage relative rocking or pivoting between the first and second yokes. For example the web of the joint member, or the said proximal regions of the third side walls, may be formed to provide a pivot pin or pivot pins for cooperation with a curved surface or surfaces of the second yoke (e.g. similar to pivot pin 23 and edge recesses 18 shown in GB-B-2011250). In this latter case the inwardly extending projection means may have an angled surface facing the web means of the joint member (in a similar manner to the web 25 shown in GB-B-2011250). Alternatively the inwardly extending projection means may comprise pivot pins for cooperation with recesses formed in the spaced apart second side walls.

According to another aspect of the present invention a method of assembling a windscreen wiper blade assembly of the kind referred to is characterised in that the method comprises retaining the spaced apart second walls of the or each second yoke between the said proximal portions of the spaced apart third side walls of the, or the associated, joint member and subsequently resiliently deflecting towards each other the said distal portions of the spaced apart third side walls to enable the joint member and its retained second yoke to pass between the spaced apart first side walls and to enable interengagement of the first and second interengaging means.

An embodiment of the invention will now be described, by way of example only, with reference to the accompanying drawings, in which

Figures 1 to 4 are schematic views showing four steps in the assemblage of a windscreen wiper blade assembly according to the invention,

Figure 5 is a sectional view, on an enlarged scale, of part of a windscreen wiper blade assembly according to the invention and showing a second yoke joined to a first yoke by means of a joint member,

Figures 6 and 7 are views from above and from one side of the joint member shown in Figure 5, and

Figure 8 is a schematic view of an alternative design of a second yoke of an alternative embodiment of wiper blade assembly according to the invention.

The drawings show a windscreen wiper blade assembly according to the invention comprising a channel shaped metallic main or first yoke 1 having spaced apart side walls 2,3 connected by an apertured web 4 and a channel shaped metallic clawed or second yoke 5 (only one of which is shown in the drawings) joined to each end of the first yoke 1 by means of a joint member 6 made of a non-metallic, e.g. plastics, material. The second yoke 5 has spaced apart second side walls 7 and 8 connected by a web 9 and the joint member 6, which is also channel shaped but oriented in an opposite direction to the channel shaped yokes 1 and 5, has spaced apart third side walls 10 and 11 connected by a web 12. Substantially midway between the ends of the second yoke 5, the web 9 and parts of the side walls 7 and 8 are cut away in a cut away region 15 to provide side wall portions 7a and 8a of reduced height.

The side walls 10 and 11 each consist of a proximal portion adjacent the web 12 and a distal portion remote from the web 12. Ribs 13 and 14 extend inwardly from the side walls 10 and 11, respectively, and serve to retain the second yoke between the side walls 10 and 11 with the side wall portions 7a and 8a positioned between the proximal portions of the side walls 10 and 11 in one direction and between the ribs 13 and 14 and the web 12 in the other direction. The ribs 13 and 14 have angled surfaces 13a and 14a facing away from the web 12. Projections 20 and 21 extend outwardly from the distal portions of the side walls and 11, respectively, and interengage with recesses 22 and 23, respectively, formed in the side walls 2 and 3.

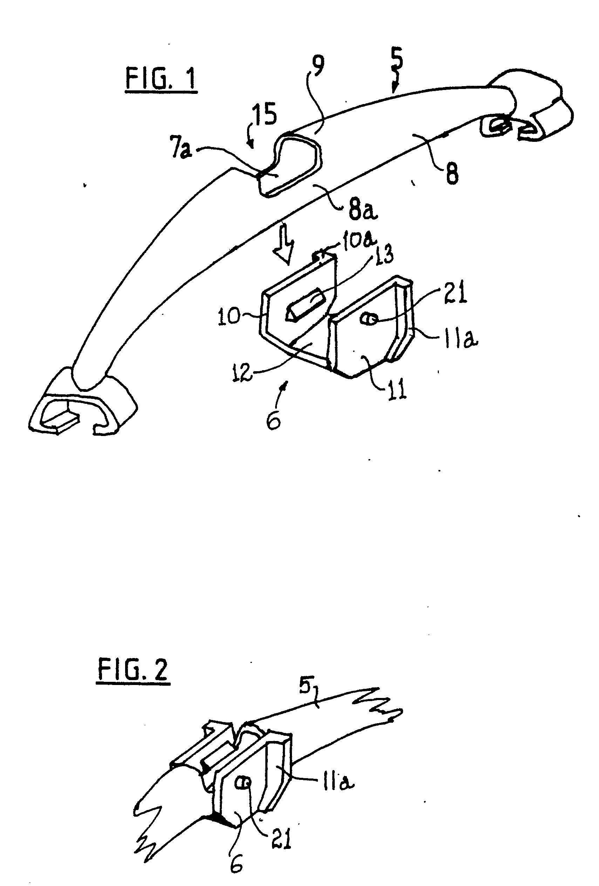

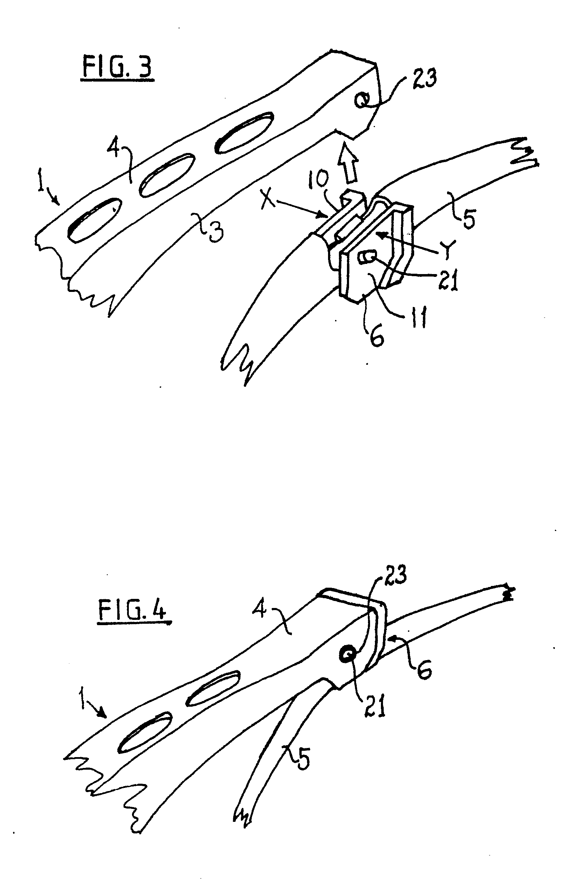

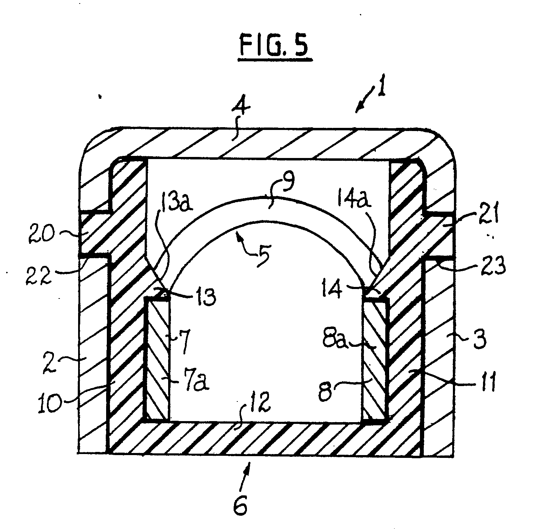

The wiper blade assembly is assembled from its various components by following the steps illustrated in Figures 1 to 4. In order to connect each second yoke 5 to the first yoke 1, the second yoke 5 is initially pushed downwardly relative to the joint member 6 between the spaced apart upstanding side walls 10 and 11 thereof. As the free ends of the walls 7 and 8 contact and move over the angled surfaces 13a and 14a, respectively, the side walls 10 and 11 are resiliently deflected outwards. When the free ends of the walls 7 and 8 reach the web 12, the side walls 10 and 11 resiliently snap back into their substantially parallel disposition with the ribs 13 and 14 located on top of the side wall portions 7a and 8a, respectively (see Figure 2). The joint member 6 and the retained second yoke are then positioned adjacent one end of the first yoke 1 (see Figure 3) and the distal portions of the spaced apart side walls 10 and 11 are resiliently deflected inwards towards each other, by the application of finger pressure to the distal portions in the directions of the arrows X and Y, to move the free ends of the projections 20 and 21 sufficiently close together to enable them to be moved between the spaced apart side walls 2 and 3 of the first yoke 1. As can be seen in Figure 3, the provision of the cut away region 15 ensures that the inward deflection of the distal portions is not obstructed by any part of the second yoke. In particular the side wall portions 7a and 8a are located completely between the proximal portions of the side walls 10 and 11 and the length of the cut away region 15 is greater than the corresponding length of the joint member 6. The joint member 6 and retained second yoke 5 are then moved upwardly relative to the first yoke 1 so that the resiliently inwardly deflected walls 10 and 11 are moved between the spaced apart side walls 2 and 3 until the projections 20 and 21 spring outwardly into interengagement with the recesses 22 and 23. As this interengagement occurs, the walls 10 and 11 spring back into their substantially parallel disposition as shown in Figures 4 and 5.

Each side wall 10, 11 has an outwardly extending flange 10a, 11a, respectively, formed at one of its ends. These flanges 10a and 11a abut against the ends of the side walls 2 and 3, respectively, when the projections 20 and 21 are interengaged with the recesses 22 and 23. The combination of theses abutting surfaces and interengaging parts ensures that the joint member 6 is substantially rigidly secured to the first yoke 1.

The resilience of the joint member 6 enables the yoke to rock or pivot slightly relative to the yoke 1 even though, as shown, the distance between each rib 13, 14 and the web 12 is only slightly greater than the height of the side wall portions 7a and 8a. However other designs for positively ensuring pivoting movement between the second yoke 5 and the first yoke 1 are possible. For example instead of the ribs 13 and 14, the side walls 7 and 8 and the side walls 10 and 11 could be provided with interengaging pivot pins and recesses. Alternatively, the web 12, or the proximal portions of the walls 10 and 11 could be provided with pivot pin means on which curved lower edge surfaces of the side wall portions 7a and 8a could pivot or rock. In this case the ribs 13 and 14 could be provided with angled lower surfaces limiting the rocking or pivoting movement of the second yoke 5. (A similar construction to this is shown in GB-B-2011250 where pivot pin 23 defines the "pivot pin means", edge recesses 18 define the "curved lower edge surfaces" and web 25 defines the "angled lower surfaces".).

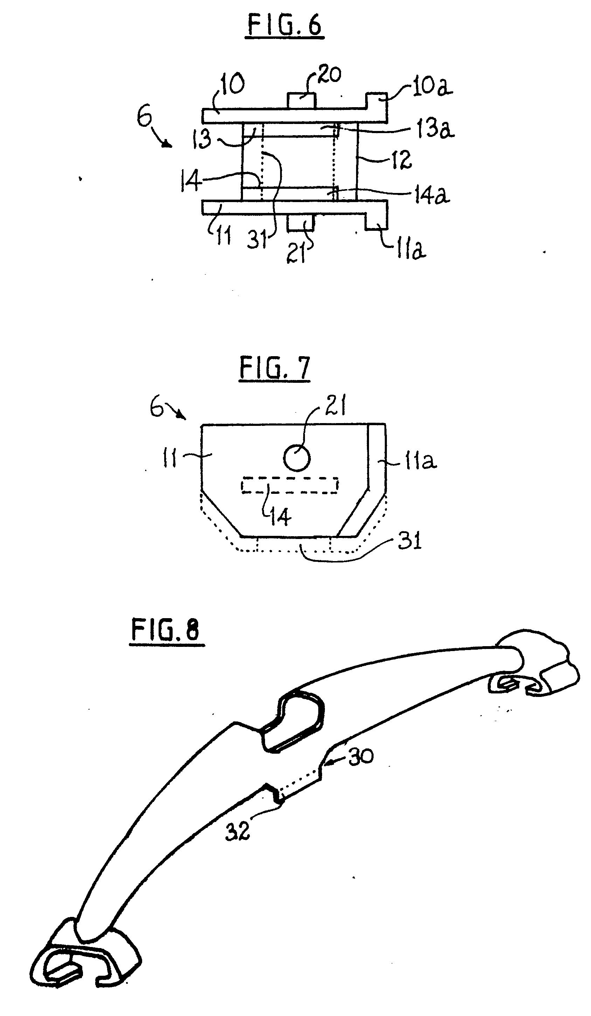

Another desirable modification is shown in Figure 8. Since the cut away region 15 tends to weaken the second yoke 5, the side walls 7 and 8 are each provided with a downwardly extending extension 30 (only one of which can be seen in Figure 8). The distance between each of the ribs 13 and 14 and the web 12 needs to be increased to accommodate the extensions 30. However this increase in distance can be minimised by providing an aperture 31 dotted in the web 12 in which the lower part 32 of each extension is received. These modifications are shown in dotted lines in Figures 6 and 7. Although only one large aperture 31 is shown in the modified joint member shown in dotted lines in Figure 6, two smaller spaced apart and parallel elongate apertures could alternatively be provided in the web 12, adjacent the side walls 10 and 11, for receiving the elongate lower parts 32 of the extensions.

## Claims

1. A windscreen wiper blade assembly comprising a metallic channel shaped first yoke (1) having spaced apart first side walls (2, 3), at least one second yoke (5) having spaced apart second side walls (7, 8), and at least one non-metallic, generally channel shaped joint member (6) for respectively joining said at least one second yoke (5) to said first yoke (1), the or each joint member having resiliently deflectable, spaced apart third side walls (10, 11) which are connected by web means (12) and which each comprise a proximal portion adjacent said web means and a distal portion remote from said web means, the or each joint member (6) having first interengaging means (20, 21) for interengaging with second interengaging means (22, 23) on said first yoke (1) to secure the joint member to the first yoke between the spaced apart first side walls thereof and retaining means (13, 14) for retaining the, or the associated, second yoke (5) between said spaced apart third side walls (10, 11), characterised in that the or each channel shaped joint member (6) is oriented in an opposite direction to the channel shaped first yoke (1), the said first interengaging means (20, 21) are formed on the said distal portions of said third side walls of the or each joint member and in that said retaining means (14) retain the second side walls (7, 8) of the or each second yoke between the said proximal portions of said third side walls of the, or the associated, joint member so as not to obstruct the space between the said distal portions thereby enabling the latter to be resiliently deflected towards each other.

2. A blade assembly accordingto claim 1, characterised in that the or each second yoke is metallic.

3. A blade assembly according to claim 1 or 2, characterised in that the first and third side walls are substantially parallel to each other.

4. A blade assembly according to claim 1, 2 or 3, characterised in that the first yoke has an apertured web (4) connecting its spaced apart first walls (2, 3).

5. A blade assembly according to any one of the preceding claims, characterised in that the first interengaging means of the or each joint member comprise a separate projection (20, 21) extending outwardly from each third side wall (10, 11) and the second interengaging means comprise projection-receiving recesses (22, 23) in the first side walls.

6. A blade assembly according to any one of claims 1 to 4, characterised in that the first interengaging means (20, 21) comprise recesses and the second interengaging means (22, 23) comprise inwardly extending projections.

7. A blade assembly according to claim 5 or 6, characterised in that the free end surface of each projection (20, 21) is angled to assist inward deflection of the said distal portions of the third side walls as the joint member (6) is inserted between the spaced apart first side walls (2, 3) during assemblage of a windscreen wiper blade assembly.

8. A blade assembly according to any one of the preceding claims, characterised in that the or each second yoke (5) is channel shaped and has a web (9) connecting its spaced apart second side walls (7, 8).

9. A blade assembly according to claim 8, characterised in that the second yoke web (9) and adjacent parts of the second side walls are cut away in a region of the second yoke which is retained between the spaced apart third side walls (10, 11) of the joint member (6).

10. A blade assembly according to any one of the preceding claims, characterised in that said second side walls (7, 8), in the region where they are retained between said third side walls (10, 11), have extension means (30) extending away from the bottom of the channel shaped first yoke (1).

11. A blade assembly according to claim 10, characterised in that the said web means (12) is apertured (31) to receive said extension means.

12. A blade assembly according to any one of the preceding claims, characterised in that said retaining means for the or each joint member comprise inwardly extending projection means (13, 14) on the spaced apart third side walls (10, 11) for cooperation with the, or the associated, second yoke (5) to retain the latter between the spaced apart third side walls (10, 11).

13. A blade assembly according to claim 12, characterised in that each projection means comprises a rib (13, 14) for retaining the second side walls (7, 8) between the ribs (13, 14) and the web means (12) of the joint member (6).

14. A blade assembly according to claim 12 or 13, characterised in that each projection means (13, 14) has an inclined surface facing away from the web means (12) of the joint member (6) to encourage the outward resilient deflection of the spaced apart third side walls (10, 11) as the second yoke (5) is moved between the third walls prior to becoming retained therebetween during assemblage of the wiper blade assembly.

15. A method of assembling a windscreen wiper blade assembly comprising a metallic first yoke (1) having spaced apart first side walls (2, 3), at least one second yoke (5) having spaced apart second side walls (7, 8), and at least one non-metallic, generally channel shaped joint member (6) for respectively joining said at least one second yoke (5) to said first yoke (1), the or each joint member (6) having resiliently deflectable, spaced apart third side walls (10, 11) which are connected by web means (12) and which each comprise a proximal portion adjacent said web means (12) and a distal portion remote from said web (12), the or each joint member (6) having first interengaging means (20, 21) for interengaging with second interengaging means (22, 23) on said first yoke (1) to secure the joint member (6) to the first yoke (1) between the spaced apart first side walls (2, 3) thereof and retaining means (13, 14) for retaining the, or the associated, second yoke (5) between said spaced apart third side walls (10, 11), characterised in that the method comprises retaining the spaced apart second walls (7, 8) of the or each second yoke (5) between the said proximal portions of the spaced apart third side walls of the, or the associated, joint member (6) and subsequently resiliently deflecting towards each other the said distal portions of the spaced apart third side walls (10 11) to enable the joint member (6) and its retained second yoke (5) to pass between the spaced apart first side walls (2, 3) and to enable interengagement of the first (20, 21) and second (22, 23) interengaging means.

## FIG. 1

## FIG. 2

FIG. 3

FIG. 4

## FIG. 5

## FIG. 6

## FIG. 7

## FIG. 8